# EUROPÄISCHE PATENTSCHRIFT

(11) **EP 0 687 516 B1**
(45) Veröffentlichungstag und Bekanntmachung des Hinweises auf die Patenterteilung: **29.03.2000**
(21) Anmeldenummer: 95108691.7
(22) Anmeldetag: 07.06.1995
(51) Int. Cl.: B23B 51/10

(54) **Kombinationswerkzeug**
Combination tool
Outil combiné

(30) Priorität: 17.06.1994 DE 4421002
(43) Veröffentlichungstag der Anmeldung: 20.12.1995
(73) Patentinhaber: Joh. & Ernst Link GmbH & Co. KG, D-70565 Stuttgart (DE)
(72) Erfinder: Link, Hans-Jörg, D-70563 Stuttgart (DE); Schurer, Werner, D-71101 Schönaich (DE)
(74) Vertreter: Kohl, Karl-Heinz

(56) Entgegenhaltungen:
- WO-A-90/04474
- DE-U- 9 319 460
- FR-A- 2 424 088
- US-A- 4 076 443

## Beschreibung

Die Erfindung betrifft ein Kombinationswerkzeug nach dem Oberbegriff des Anspruches 1.

Bei diesem bekannten Kombinationswerkzeug (FR-A-2 424 088) ragt ein Werkzeug in eine zentrale axiale Aufnahmeöffnung der Werkzeugaufnahme. Auf ihr freies Ende wird eine Spannhülse geschraubt, mit der die hülsenförmige, aus zwei Hälften bestehende Halterung zusammengehalten und in eine konische Aufnahme der Werkzeugaufnahme gezogen wird. Hierbei werden die beiden Hälften der Halterung in Richtung zueinander bewegt, so daß das durch die Halterung in die Werkzeugaufnahme ragende Werkzeug festgeklemmt wird. Die Handhabung zum Einspannen des Werkzeuges ist aufgrund der Vielzahl von Bauteilen, insbesondere der zweiteiligen Ausbildung der Halterung, aufwendig und umständlich. Hinzu kommt, daß zum Festklemmen sowohl der Halterung als auch des Werkzeuges ein zusätzliches Bauelement in Form der Spannhülse erforderlich ist, die auf ein Gewindeende der Werkzeugaufnahme geschraubt wird.

Es ist auch ein Kombinationswerkzeug bekannt (WO-A-90/04474), bei dem die Werkzeugaufnahme einen axialen, im Durchmesser verringerten Ansatz aufweist, auf den eine Halterung aufgesetzt und mit radial liegenden Schrauben befestigt wird. Die Halterung nimmt Schneidenteile auf. Durch eine axiale Öffnung der Halterung ragt ein Werkzeug in eine zentrale axiale Aufnahmeöffnung der Werkzeugaufnahme. Innerhalb der Aufnahmeöffnung wird der Schaft des Werkzeuges mittels Schrauben festgeklemmt, die in der Werkzeugaufnahme gelagert sind. Das Werkzeug und die Halterung werden mit voneinander unabhängigen Schrauben in ihrer Einbaulage festgeklemmt. Dadurch besteht das Kombinationswerkzeug aus einer großen Zahl von Einzelteilen, die die Handhabung des Kombinationswerkzeuges beim Einspannen des Werkzeuges erschweren.

Der Erfindung liegt die Aufgabe zugrunde, das gattungsgemäße Kombinationswerkzeug so auszubilden, daß es bei konstruktiv einfachem Aufbau einen einfachen Zusammenbau seiner Einzelteile gewährleistet.

Diese Aufgabe wird beim gattungsgemäßen Kombinationswerkzeug erfindungsgemäß mit den kennzeichnenden Merkmalen des Anspruches 1 gelöst.

Beim erfindungsgemäßen Kombinationswerkzeug wird die Klemmkraft zur Befestigung der Klemmhalterung und des Werkzeuges ohne Einsatz eines zusätzlichen Spannelementes von der Werkzeugaufnahme aufgebracht. Die Klemmhalterung ragt mit ihrem hülsenförmigen Spannteil in die axiale Aufnahmeöffnung der Werkzeugaufnahme. Der Schaft des Werkzeuges wird von der axial verlaufenden Aufnahme des hülsenförmigen Spannteiles der Klemmhalterung aufgenommen. Die Spannelemente der Klemmhalterung werden radial nach innen elastisch verformt, wodurch der Schaft des Werkzeuges in der Aufnahme der Klemmhalterung ebenfalls radial verspannt wird. Auf diese Weise können in einem einzigen Spannvorgang die Klemmhalterung und das Werkzeug in ihrer jeweiligen Einbaulage verspannt werden. Da die Spannelemente unabhängig voneinander elastisch verformbar sind, kann das Werkzeug zuverlässig in der Klemmhalterung verspannt werden. Das erfindungsgemäße Kombinationswerkzeug zeichnet sich durch eine nur geringe Zahl von Bauteilen aus und ist einfach in der Handhabung.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in Seitenansicht ein erfindungsgemäßes Kombinationswerkzeug,
- Fig. 2 und Fig. 3: in Darstellungen entsprechend Fig. 1 weitere Ausführungsformen von erfindungsgemäßen Kombinationswerkzeugen,
- Fig. 4: eine Klemmhalterung des erfindungsgemäßen Kombinationswerkzeuges,
- Fig. 5: eine Ansicht in Richtung des Pfeiles V in Fig. 4,
- Fig. 6 und Fig. 7: in Darstellungen entsprechend den Fig. 4 und 5 eine zweite Ausführungsform einer Klemmhalterung des erfindungsgemäßen Kombinationswerkzeuges,
- Fig. 8: in Seitenansicht eine weitere Ausführungsform eines erfindungsgemäßen Kombinationswerkzeuges,
- Fig. 9: eine Seitenansicht einer weiteren Ausführungsform einer Klemmhalterung eines erfindungsgemäßen Kombinationswerkzeuges.

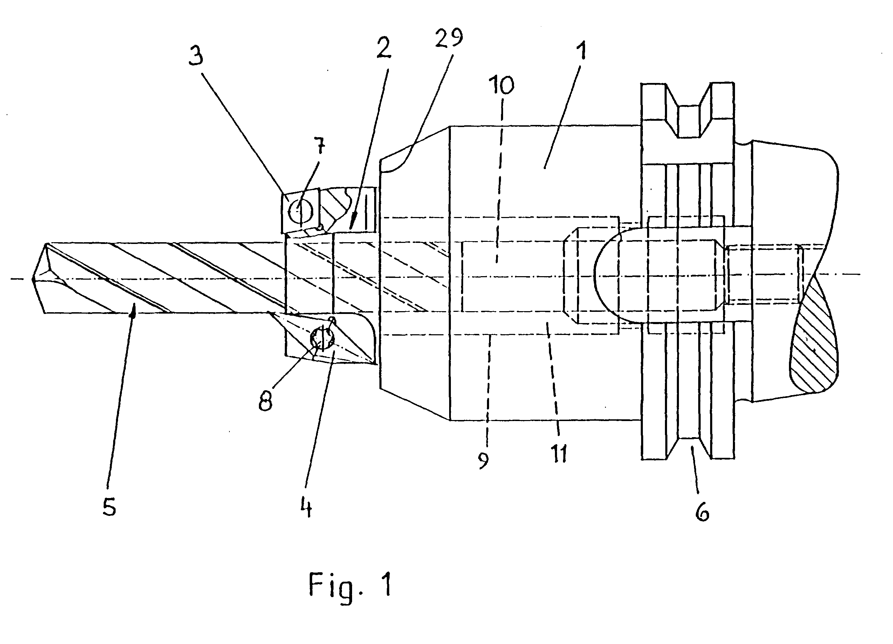

Das Kombinationswerkzeug gemäß Fig. 1 hat eine an sich bekannte Werkzeugaufnahme 1. Mit ihr wird das Kombinationswerkzeug mit einer Spindel einer Bearbeitungsmaschine in bekannter Weise verbunden. Die Werkzeugaufnahme 1 ist mit einer Greifernut 6 versehen, so daß das Kombinationswerkzeug in bekannter Weise von einem Greifersystem der Bearbeitungsmaschine für den Werkzeugwechsel erfaßt werden kann. Da die Werkzeugaufnahme 1 mit der Greifernut 6 bekannt ist, wird sie nicht näher erläutert.

Die Werkzeugaufnahme 1 ist in bekannter Weise als Hydrospannbuchse ausgebildet, mit der eine Klemmhalterung 2 hydraulisch gespannt wird. Die Klemmhalterung 2 nimmt ein Werkzeug 5 auf, das bei der Ausführungsform gemäß Fig. 1 ein Spiralbohrer ist. Die Klemmhalterung 2 ist im Ausführungsbeispiel mit einer Planplatte 3 und einer Fasplatte 4 versehen. Diese beiden Schneidplatten 3, 4 sind vorteilhaft als Wendeschneidplatten ausgebildet, die mit Schrauben 7, 8 lösbar an der Klemmhalterung 2 befestigt sind.

Die Hydrospannaufnahme 9 der Werkzeugaufnahme 1 ist in bekannter Weise ausgebildet. Die Hydrospannaufnahme 9 nimmt eine Spannhülse 11 der Klemmhalterung 2 auf. In die Spannhülse 11 ist ein Einspannschaft 10 des Spiralbohrers 5 eingesetzt. Die Spannhülse 11 liegt an der Innenwandung der Hydrospannaufnahme 9 der Werkzeugaufnahme 1 an. Die Innenwandung der Hydrospannaufnahme 9 ist radial nach innen mittels Hydraulikmedium elastisch aufweitbar. Dadurch wird die Spannhülse 11 der Klemmhalterung 2 hochgenau in der Hydrospannaufnahme 9 der Werkzeugaufnahme 1 gespannt. Damit wird auch der Einspannschaft 10 des Spiralbohrers 5 hochgenau eingespannt.

Mit dem Kombinationswerkzeug können an einem Werkstück in einem Arbeitsgang mehrere Bearbeitungen vorgenommen werden. Mit dem axial über die Klemmhalterung 2 überstehenden Spiralbohrer 5 wird im Werkstück zunächst eine Bohrung eingebracht. Anschließend wird mit der Fasplatte 4 am Werkstück im Bereich des Bohrungsrandes eine Fase angebracht. Mit der Planplatte 3 kann dann am Werkstück eine Plansenkung vorgenommen werden.

Bei einer einfachsten Ausführungsform des Kombinationswerkzeuges ist die Klemmhalterung 2 mit nur einer einzigen Fasplatte 4 oder nur einer einzigen Planplatte 3 versehen. Im dargestellten Ausführungsbeispiel hat die Klemmhalterung 2 eine einzige Fasplatte 4 sowie zwei Planplatten 3, die diametral einander gegenüberliegend oder auch in jedem anderen geeigneten Winkelabstand voneinander an der Klemmhalterung 2 vorgesehen sein können. Da die Schneidplatten 3, 4 als Wendeplatten ausgebildet sind, können sie bei Verschleiß der jeweiligen in Eingriff befindlichen Schneide gedreht werden, um eine noch ungenutzte Schneide in die Arbeitsposition zu bringen.

Da die Planplatten 3 und die Fasplatte 4 an der Klemmhalterung 2 vorgesehen sind, können mit der Klemmhalterung 2 unterschiedlichste Werkzeuge 5 verwendet werden.

Die Werkzeuge 5 können in der Klemmhalterung 2 axial verstellt werden oder es lassen sich unterschiedlich lange Spiralbohrer 5 einsetzen, so daß mit dem Kombinationswerkzeug unterschiedlich lange Bohrungen im Werkstück hergestellt werden können. Da für das Kombinationswerkzeug herkömmliche Spiralbohrer 5 verwendet werden können, ist die Umrüstung auf unterschiedliche Bohrlängen sehr einfach und vor allen Dingen kostengünstig möglich.

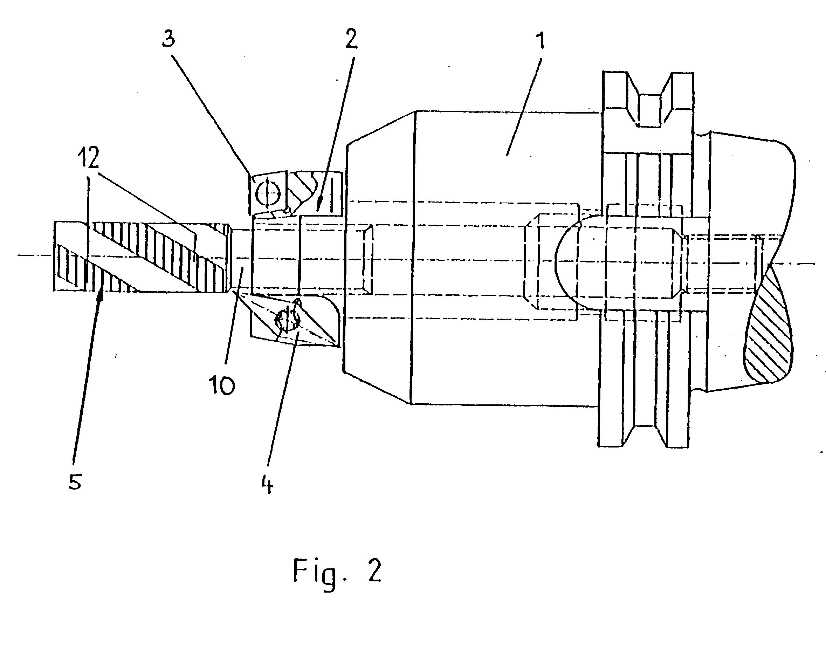

Fig. 2 zeigt die Möglichkeit, in die Klemmhalterung 2 als Werkzeug 5 einen Gewindefräser einzusetzen. Er wird mit seinem Einspannschaft 10 in die Klemmhalterung 2 eingesetzt und dort in der beschriebenen Weise gespannt. Es können unterschiedlich lange Gewindefräser 5 verwendet werden, um unterschiedlich lange Gewindebohrungen im Werkstück anzubringen.

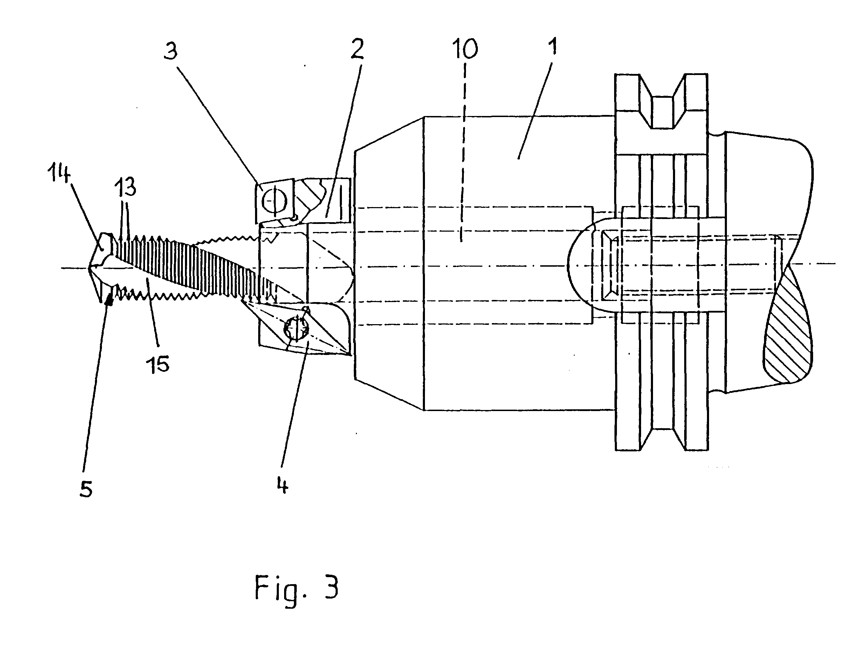

Bei der Ausführungsform gemäß Fig. 3 ist in die Klemmhalterung 2 als Werkzeug 5 ein Bohrgewindefräser mit seinem Einspannschaft 10 eingespannt. Der Gewindefräser 5 ist mit ringförmigen, parallel zueinander liegenden Schneiden 13 versehen, die keine Steigung haben. Der Bohrgewindefräser 5 hat einen Bohrteil 14 an seinem freien Ende, dessen Arbeitsdurchmesser größer ist als die anschließenden Ringschneiden 13. Der Bohrgewindefräser 5 ist außerdem in bekannter Weise mit wendelförmigen Spannuten 15 versehen.

Beim Arbeiten mit dem Kombinationswerkzeug gemäß Fig. 3 wird mit dem Bohrteil 14 des Bohrgewindefräsers 5 zunächst eine Bohrung im Werkstück hergestellt. Unmittelbar anschließend wird mit den Schneidenteilen 3, 4 eine Fase und eine Plansenkung am Werkstück angebracht. Da der Arbeitsdurchmesser des Bohrteiles 14 größer ist als der Durchmesser der Schneiden 13, kommen die Schneiden bei diesem Bohrvorgang nicht mit der Bohrungswandung in Berührung. Nach der Herstellung der Bohrung im Werkstück wird das rotierende Werkzeug innerhalb der Bohrung radial versetzt und umlaufend bewegt, wobei die Schneiden 13 in der Bohrungswandung ein Gewinde fräsen. Hierbei wird das Kombinationswerkzeug axial um die Höhe der Gewindesteigung verschoben.

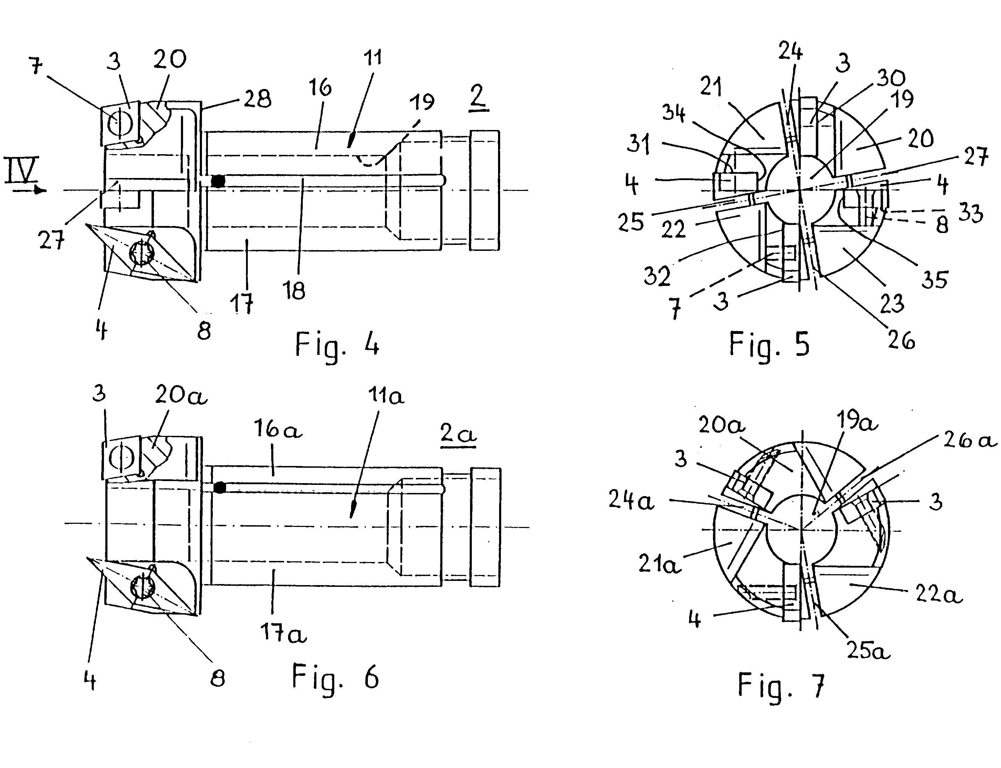

Die Klemmhalterung 2 wird anhand der Fig. 4 und 5 näher erläutert werden. Die grundsätzliche Ausbildung einer solchen Klemmhalterung ist bekannt und wird darum im folgenden nur in ihrer wesentlichsten Ausbildung beschrieben. Sie hat die Spannhülse 11, die im Ausführungsbeispiel aus vier Spannabschnitten 16, 17 (Fig. 4) besteht, die jeweils durch einen in Achsrichtung der Spannhülse 11 sich erstreckenden Schlitz 18 voneinander getrennt sind. Die Spannabschnitte 16, 17 sind über den Umfang der Spannhülse 11 mit vorzugsweise gleichem Winkelabstand voneinander angeordnet und begrenzen eine Aufnahmeöffnung 19, welche den Einspannschaft 10 des jeweiligen Werkzeuges 5 aufnimmt. An ihrem von den Schneidplatten 3, 4 abgewandten Ende sind die Spannabschnitte 16, 17 einstückig miteinander verbunden.

Am anderen Ende gehen die Spannabschnitte 16, 17 in im Außendurchmesser erweiterte Spannelemente 20 bis 23 über, die vorzugsweise gleichmäßig verteilt um die Achse der Klemmhalterung angeordnet und durch jeweils einen Schlitz 24 bis 27 voneinander getrennt sind. Auch die Spannelemente 20 bis 23 begrenzen die Aufnahmeöffnung 19 für den Einspannschaft 10 des Werkzeuges 5. Die Aufnahmeöffnung 19 weist vorteilhaft über ihre gesamte axiale Länge gleichen Durchmesser auf.

Wie Fig. 5 zeigt, hat die Klemmhalterung 2 diametral gegenüberliegend zwei Planplatten 3 sowie zwei Fasplatten 4. In Umfangsrichtung der Klemmhalterung 2 sind die Plan- und die Fasplatten 3, 4 abwechselnd angeordnet. Die Platten haben jeweils einen Winkelabstand von vorzugsweise 90° voneinander. Die Spannelemente 20 bis 23 haben eine der Spannhülse 11 zugewandte ebene Unterseite 28 (Fig. 4), mit der sie an der ebenen Stirnseite 29 (Fig. 1) der Werkzeugaufnahme 1 anliegen können. Dadurch ist die maximale Einstecktiefe der Klemmhalterung 2 in die Werkzeugaufnahme 1 bestimmt. Infolge der Anlage nimmt die Werkzeugaufnahme 1 im Einsatz die Axialkräfte auf.

Um die Planplatten 3 und die Fasplatten 4 an der Klemmhalterung 2 befestigen zu können, sind die Spannelemente 20 bis 23 mit Aufnahmen 30 bis 33 (Fig. 5) versehen, die zur Stirnseite der Klemmhalterung 2 und gegebenenfalls zum jeweiligen Schlitz 24 bis 27 offen sind. Die Aufnahmen 30 bis 33 haben ebene Anlageflächen für die Schneidplatten 3, 4. Für die Planplatten 3 sind weitere Anlageflächen 34 und 35 vorgesehen, an denen die Planplatten 3 mit einer ihrer Schneiden anliegen. Die jeweiligen Anlageflächen der Aufnahmen 31 und 33 liegen winklig zueinander. Die Spannelemente 20 bis 23 sind jeweils so ausgebildet, daß die Schrauben 7, 8 zur Befestigung der Schneidplatten mit einem entsprechenden Schraubendreher bequem zugänglich sind.

Die Schneidplatten 3, 4 können je nach dem gewünschten Bearbeitungsvorgang unterschiedlich gestaltet sein. An der Klemmhalterung 2 kann eine unterschiedliche Zahl von Schneidplatten befestigt werden. Es ist auch möglich, an der Klemmhalterung 2 keine Schneidplatten zu befestigen, falls mit dem Kombinationswerkzeug beispielsweise nur ein Bohrvorgang durchgeführt werden soll.

Das jeweilige Werkzeug 5 wird mit seinem Einspannschaft 10 von der Stirnseite der Klemmhalterung 2 aus in die Aufnahmeöffnung 19 eingesetzt. Die Klemmhalterung 2 selbst kann anschließend oder vorher in die Hydrospannaufnahme 9 der Werkzeugaufnahme 1 eingesetzt werden. Anschließend wird die Klemmhalterung 2 durch Hydraulikbeaufschlagung hydraulisch in der Spannaufnahme 9 der Werkzeugaufnahme 1 gespannt. Die Spannabschnitte 16, 17 der Spannhülse 11 werden radial nach innen gedrückt, wodurch der Einspannschaft 10 des Werkzeuges 5 festgespannt wird.

Das Werkzeug 5 läßt sich stufenlos gegenüber der Klemmhalterung 2 verschieben und dann hydraulisch spannen. Dadurch läßt sich in einfacher Weise die Länge der herzustellenden Bohrung im Werkstück einstellen.

Die Fig. 6 und 7 zeigen eine Ausführungsform einer Klemmhalterung 2a, die lediglich drei Spannabschnitte 16a, 17a und dementsprechend auch nur drei Spannelemente 20a bis 22a aufweist. Die Spannabschnitte 16a, 17a der Spannhülse 11a sowie die Spannelemente 20a bis 22a sind wiederum vorzugsweise gleichmäßig über den Umfang der Klemmhalterung 2a verteilt angeordnet. Die Spannelemente 20a bis 22a sind durch die Schlitze 24a bis 26a voneinander getrennt. Bei dieser Ausführungsform sind an der Klemmhalterung 2a zwei Planplatten 3 und eine Fasplatte 4 befestigt. Im übrigen ist die Klemmhalterung 2a gleich ausgebildet wie bei der Ausführungsform nach den Fig. 4 und 5. Das Werkzeug 4 wird wiederum in die Aufnahmeöffnung 19a der Klemmhalterung eingesetzt. Die Klemmhalterung 2a ihrerseits wird mit der Spannhülse 11a in die Aufnahme 9 der Werkzeugaufnahme 1 eingesetzt und dort in der beschriebenen Weise hydraulisch gespannt. Die Spannabschnitte 16a, 17a und die mit ihnen verbundenen Spannelemente 20a bis 22a sind wiederum als Federteile ausgebildet, die infolge der hydraulischen Spannung in der Werkzeugaufnahme 1 radial nach innen gedrückt werden und dadurch den Einspannschaft 10 des Werkzeuges 5 einwandfrei festklemmen.

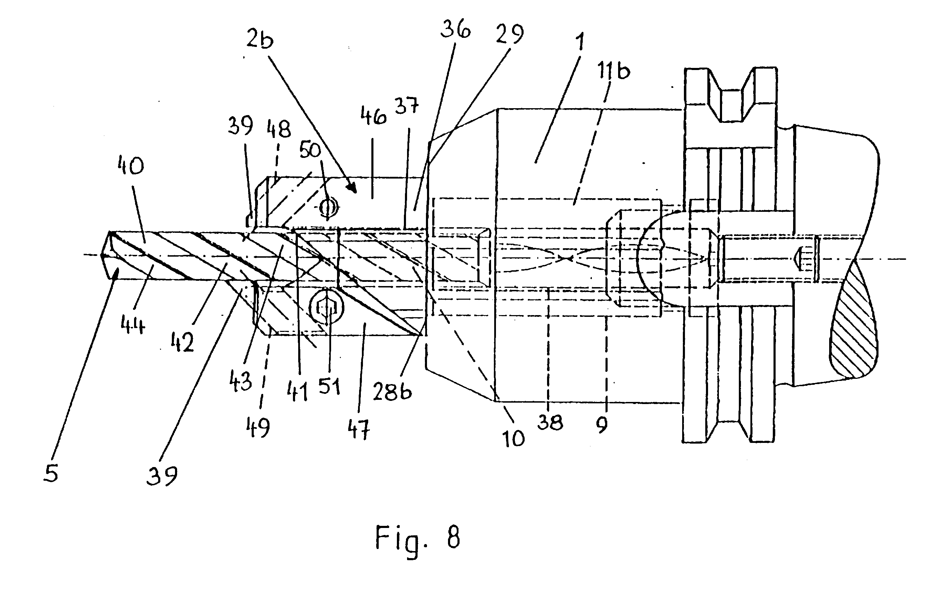

Fig. 8 zeigt eine Ausführungsform, bei der in die Werkzeugaufnahme 1 die Klemmhalterung 2b eingesetzt wird, deren Spannhülse 11b in die Hydrospannaufnahme 9 der Werkzeugaufnahme 1 eingesetzt ist.

Die Spannhülse 11b schließt an einen Spannteil 36 an, der mit seiner ebenen Unterseite 28b an der Stirnseite 29 der Werkzeugaufnahme 1 anliegt. Der Spannteil 36 und die Spannhülse 11b sind jeweils mit einer axialen und mittig liegenden Bohrung 37 und 38 zur Aufnahme des Werkzeuges 5 versehen, das im Ausführungsbeispiel ein Spiralbohrer ist. Im Spannteil 36 ist wenigstens ein Fasteil 39 angeordnet. Im dargestellten Ausführungsbeispiel sind im Spannteil 36 zwei Fasteile 39 diametral einander gegenüberliegend vorgesehen.

Die Bohrungen 37, 38 im Spannteil 36 und in der Spannhülse 11b haben vorteilhaft gleichen Durchmesser, so daß sie in einem Arbeitsgang hergestellt werden können.

Der Spiralbohrer 5 hat den Schaft 10 und einen daran anschließenden Arbeitsteil 40. In ihm sind zwei wendelförmig verlaufende Spannuten 41 und 42 vorgesehen, die sich bis zur Bohrerspitze erstrecken. Zwischen den Spannuten 41, 42 verläuft ein entsprechend wendelförmig verlaufender Steg 43, 44.

Der Spannteil 36 hat zwei etwa diametral einander gegenüberliegende, im wesentlichen axial sich erstreckende Zwischenstücke 46 und 47, die in Umfangsrichtung voneinander getrennt sind. Diese Zwischenstücke 46, 47 erstrecken sich über einen Teil der axialen Länge des Spannteiles 36 bis zu dessen Stirnseite. Da die Zwischenstücke 46, 47 voneinander getrennt sind, werden zwischen ihnen Ausnehmungen gebildet, die sich von der Bohrung 37 bis zur äußeren Mantelfläche des Spannteils 36 erstrecken. Durch diese Ausnehmungen kann während des Bohrvorganges das Bohrmaterial, das über die Spannuten 41, 42 nach hinten gefördert wird, seitlich austreten.

Im Spannteil 36 sind die beiden Fasteile 39 angeordnet, die in Aufnahmen 48 und 49 des Spannteiles 36 gelagert sind. Die Achsen der diametral einander gegenüberliegenden Aufnahmen 48, 49 konvergieren in Richtung auf die Stirnseite des Spannteils 36. Die Aufnahmen 48, 49 durchsetzen die Zwischenstücke 46, 47 und münden teilweise in deren Stirnseiten. Auf einer Seite werden die Aufnahmen 48, 49 durch Klemmschenkel begrenzt, die durch Klemmschrauben 50, 51 gegen die Zwischenstücke 46, 47 geklemmt werden. Die Aufnahmen 48, 49 sind in den Zwischenstücken 46, 47 so vorgesehen, daß die Fasteile 39 geringfügig aus diesen Aufnahmen in Richtung auf die Klemmschenkel ragen. Beim Anziehen der Klemmschrauben 50, 51 legen sich die Klemmschenkel dadurch fest gegen die Fasteile 39, die dadurch sicher in den Aufnahmen 48, 49 festgeklemmt werden. In den Aufnahmen 48, 49 sind die Fasteile 39 verdrehsicher gehalten. Dies wird durch entsprechende Querschnittsausbildungen der Fasteile 39 und der Aufnahmen 48, 49 erreicht.

Das Werkzeug 5 wird mit seinem Schaft 10 in die Klemmhalterung 2b gesteckt. Die Fasteile 39 werden von außen in die Aufnahmen 48, 49 so weit geschoben, bis sie an der Rückenfläche des jeweiligen Steges 43, 44 des Werkzeuges 5 anliegen. Dann werden die Klemmschenkel mit den Klemmschrauben 50, 51 gegen die Fasteile 39 gezogen, so daß sie einwandfrei festgeklemmt werden.

Damit mit dem Werkzeug 5 eine Bohrung mit einer anderen Länge gebohrt werden kann, läßt es sich axial gegenüber der Klemmhalterung 2b nach Lösen der Hydraulikspannung verstellen.

Mit dem Werkzeug 5 wird zunächst im Werkstück die entsprechende Bohrung angebracht. Bei weiterem Bohrfortschritt kommen die Fasteile 39 mit dem Bohrungsrand in Eingriff und stellen an ihm eine entsprechende Fase her. Aus diesem Grunde liegen die Fasteile 39 unter einem solchen Winkel zur Achse des Werkzeuges 5, daß sie mit ihren Schneiden axial über den Spannteil 36 ragen. Falls die Fasteile 39 in ihrer Längsrichtung nachgestellt werden müssen, ist es lediglich notwendig, die Klemmschrauben 50, 51 zu lockern. Dann lassen sich die Fasteile 39 stufenlos in die gewünschte Lage verstellen, um die Fasteile 39 bei unterschiedlichen Bohrerdurchmessern jeweils zur Anlage am Spiralbohrer 5 zu bringen. Da die federnden Klemmschenkel an den Spannteil 36 angebunden sind, müssen sie nicht gesondert an ihm montiert werden.

Es ist auch möglich, die Fasteile 39 nicht mit federnden Klemmschenkeln festzuklemmen, sondern sie an den Zwischenstücken 46, 47 mit Klemmschrauben unmittelbar zu befestigen. Um eine Längsverstellung der Fasteile 39 zu ermöglichen, können sie auf einem an den Zwischenstücken 46, 47 verschieblich gelagerten Schlitten befestigt sein. Der Schlitten selbst wird dann in seiner jeweiligen Einstellage relativ zum Werkzeug 5 mit Klemmschrauben festgeklemmt.

Bei sämtlichen beschriebenen Ausführungsformen können einfache Werkzeuge 5 eingesetzt werden, da die Schneidplatten 3, 4, 39 an der Klemmhalterung 2, 2a, 2b angeordnet sind. Dadurch können herkömmliche Werkzeuge 5 verwendet werden, die sich einfach in die Klemmhalterung einsetzen lassen. Auch können unterschiedlich lange Werkzeuge in der Klemmhalterung untergebracht werden. Der Benutzer dieses Kombinationswerkzeuges benötigt darum nur eine Klemmhalterung für eine große Zahl von unterschiedlichen Werkzeugen. Die Anschaffungs- und Lagerhaltungskosten können dadurch sehr gering gehalten werden.

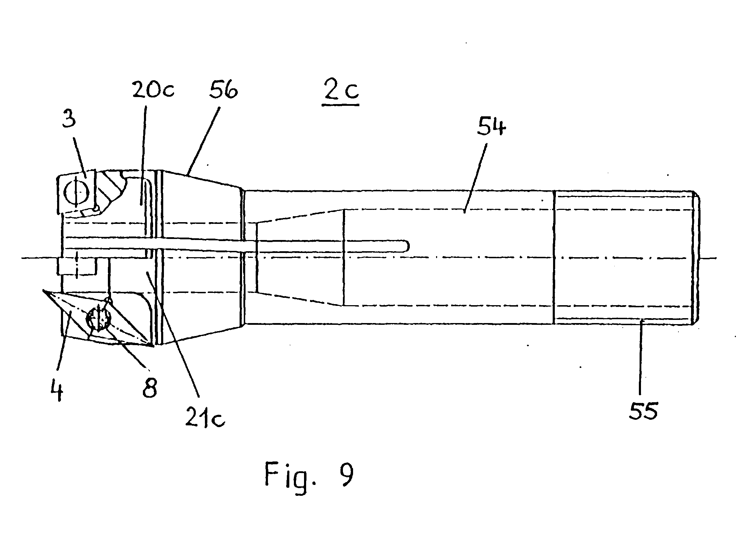

Bei sämtlichen Ausführungsformen ist es möglich, die Klemmhalterung mittels Spannzangen in der Werkzeugaufnahme zu spannen. Anstelle einer Spannhülse ist die Klemmhalterung 2c, wie Fig. 9 beispielhaft zeigt, mit einer beispielsweise vierfach geschlitzten Spannzange 54 versehen, vorzugsweise einstückig mit ihr ausgebildet, die am freien Ende ein Gewinde 55 hat. Mit ihm wird die Klemmhalterung 2c in die (nicht dargestellte) Werkzeugaufnahme geschraubt. Sie hat eine in Einschraubrichtung sich verengende Konusfläche, die mit einer Konusfläche 56 der Klemmhalterung 2c zusammenwirkt. Dadurch werden die Spannelemente 20c, 21c der Klemmhalterung 2c radial nach innen gedrückt, welche den Einspannschaft 10 des Werkzeuges 5 spannen. Die Werkzeugaufnahme wird in bekannter Weise mit der Antriebsspindel der Bearbeitungsmaschine verbunden. Da die Ausbildung und Wirkungsweise der Spannzange bekannt ist, wird sie nicht im einzelnen beschrieben.

## Patentansprüche

1. Kombinationswerkzeug mit einer Werkzeugaufnahme (1), die mit einer Antriebsspindel einer Bearbeitungsmaschine kuppelbar ist und eine Aufnahme für eine Halterung (2, 2a bis 2c) aufweist, an der wenigstens ein Schneidenteil (3, 4, 39) im Bereich ihrer Stirnseite vorgesehen ist und die eine axiale Aufnahme (19, 19a) für ein Werkzeug (5) aufweist, das mit einem Schaft (10) in eine axiale Aufnahmeöffnung der Werkzeugaufnahme (1) ragt,
dadurch gekennzeichnet, daß die Halterung (2, 2a bis 2c) als Klemmhalterung ausgebildet ist und einen hülsenförmigen Spannteil (11, 11b, 54) aufweist, der in die axiale Aufnahmeöffnung der Werkzeugaufnahme (1) ragt, daß der Spannteil (11, 11b, 54) eine axial verlaufende Aufnahme (19, 19a) aufweist, die den Schaft (10) des Werkzeuges (5) aufnimmt, und daß die Klemmhalterung (2, 2a bis 2c) in Umfangsrichtung mit Abstand voneinander liegende Spannelemente (20 bis 23; 20a bis 22a; 20c, 21) aufweist, die im Zusammenwirken mit der Werkzeugaufnahme (1) radial nach innen elastisch verformbar sind und dadurch den Schaft (10) des Werkzeuges (5) in der Aufnahme (19, 19a) der Klemmhalterung (2, 2a bis 2c) verspannen.

2. Kombinationswerkzeug nach Anspruch 1,
dadurch gekennzeichnet, daß die Klemmhalterung (2, 2a, 2b) in der Werkzeugaufnahme (1) mit einer Spannhülse (11, 11a, 11b) hydraulisch spannbar ist.

3. Kombinationswerkzeug nach Anspruch 1,
dadurch gekennzeichnet, daß der Spannteil (54) der Klemmhalterung (2c) als Spannstange ausgebildet ist.

4. Kombinationswerkzeug nach Anspruch 3,
dadurch gekennzeichnet, daß der Spannteil (54) ein Gewinde (55) aufweist, mit dem er in die Werkzeugaufnahme schraubbar ist.

5. Kombinationswerkzeug nach einem der Ansprüche 1 bis 4,
dadurch gekennzeichnet, daß der Schneidenteil (3, 4) an einem der Spannelemente (20 bis 23, 20a bis 22a) befestigt ist.

6. Kombinationswerkzeug nach Anspruch 5,
dadurch gekennzeichnet, daß der Schneidenteil (3, 4) an einer dem benachbarten Spannelement (20 bis 23, 20a bis 22a) zugewandten Seitenfläche des entsprechenden Spannelementes befestigt ist.

7. Kombinationswerkzeug nach Anspruch 5 oder 6,
dadurch gekennzeichnet, daß das Spannelement (20 bis 23, 20a bis 22a) eine in der Seitenfläche liegende Aufnahme (30 bis 33) für den Schneidenteil (3, 4) aufweist.

8. Kombinationswerkzeug nach Anspruch 7,
dadurch gekennzeichnet, daß sämtliche Spannelemente (20 bis 23, 20a bis 22a) eine Aufnahme (30 bis 33) für jeweils einen Schneidenteil (3, 4) aufweisen.

9. Kombinationswerkzeug nach einem der Ansprüche 1 bis 4,
dadurch gekennzeichnet, daß die Klemmhalterung (2b) mindestens eine schräg zur Achse des Werkzeuges (5) liegende Aufnahme (48, 49) für den Schneidenteil (39) aufweist.

10. Kombinationswerkzeug nach Anspruch 9,
dadurch gekennzeichnet, daß der Schneidenteil (39) in der Aufnahme (48, 49) durch einen federnden Klemmschenkel festklemmbar ist.

11. Kombinationswerkzeug nach einem der Ansprüche 1 bis 10,
dadurch gekennzeichnet, daß das Werkzeug (5) gegenüber dem Schneidenteil (3, 4, 39) stufenlos axial verstellbar ist.

## Claims

1. A combination tool with a tool-receiving means (1) which can be connected to a driving spindle of a cutting machine and comprises a receiving means for a retaining means (2, 2a to 2c) on which at least one cutter part (3, 4, 39) is provided in the region of its front end and which comprises an axial receiving means (19, 19a) for a tool (5) which projects with a shaft (10) into an axial receiving opening in the tool-receiving means (1), **characterized in that** the retaining means (2, 2a to 2c) is designed in the form of a clamping retaining means and comprises a sleeve-shaped tightening part (11, 11b, 54) which projects into the axial receiving opening in the tool-receiving means (1), the tightening part (11, 11b, 54) is provided with an axially extending receiving means (19, 19a) which receives the shaft (10) of the tool (5), and the clamping retaining means (2, 2a to 2c) is provided with tightening elements (20 to 23; 20a to 22a; 20c, 21) which are spaced from one another in the peripheral direction and which are resiliently deformable radially inwards in cooperation with the tool-receiving means (1) and thereby tighten the shaft (10) of the tool (5) in the receiving means (19, 19a) of the clamping retaining means (2, 2a to 2c).

2. A combination tool according to Claim 1, **characterized in that** the clamping retaining means (2, 2a to 2c) can be tightened hydraulically in the tool-receiving means (1) by a tightening sleeve (11, 11a, 11b).

3. A combination tool according to Claim 1, **characterized in that** the tightening part (54) of the clamping retaining means (2c) is designed in the form of a tightening bar.

4. A combination tool according to Claim 3, **characterized in that** the tightening part (54) is provided with a thread (55) by which it can be screwed into the tool-receiving means.

5. A combination tool according to one of Claims 1 to 4, **characterized in that** the cutter part (3, 4) is secured to one of the tightening elements (20 to 23, 20a to 22a).

6. A combination tool according to Claim 5, **characterized in that** the cutter part (3, 4) is secured to a lateral face of the corresponding tightening element facing the adjacent tightening element (20 to 23, 20a to 22a).

7. A combination tool according to Claim 5 or 6, **characterized in that** the tightening element (20 to 23, 20a to 22a) is provided with a receiving means (30 to 33) situated in the lateral face for the cutter part (3, 4).

8. A combination tool according to Claim 7, **characterized in that** all the tightening elements (20 to 23, 20a to 22a) are provided with a receiving means (30 to 33) for one cutter part (3, 4) in each case.

9. A combination tool according to one of Claims 1 to 4, **characterized in that** the clamping retaining means (2b) is provided with at least one receiving means (48, 49) situated obliquely to the axis of the tool (5) for the cutter part (39).

10. A combination tool according to Claim 9, **characterized in that** the cutter part (39) can be firmly clamped in the receiving means (48, 49) by a resilient clamping side piece.

11. A combination tool according to one of Claims 1 to 10, **characterized in that** the tool (5) can be continuously adjusted axially with respect to the cutter part (3, 4, 39).

## Revendications

1. Outil combiné comportant un logement à outil (1) susceptible d'être accouplé à une broche d'entraînement d'une machine-outil et présentant un logement pour une monture (2, 2a à 2c) sur laquelle est prévue au moins une partie de tranchant (3, 4, 39) dans la région de sa face frontale et qui présente un logement (19, 19a) axial pour un outil (5) qui fait saillie avec un fût (10) dans une ouverture axiale du logement tranchant à outil (1), caractérisé en ce que la monture (2, 2a à 2c) est réalisée sous forme de monture à coincement et présente une partie de serrage (11, 11b, 54) en forme de douille qui fait saillie jusque dans l'ouverture axiale du logement à outil (1), en ce que la partie de serrage (11, 11b, 54) présente un logement (19, 19a) s'étendant axialement, lequel reçoit le fût (10) de l'outil (5), et en ce que la monture à coincement (2, 2a à 2c) présente des éléments de serrage (20 à 23 ; 20a à 22a ; 20c, 21) situés à distance les uns des autres en direction périphérique qui, en coopérant avec le logement à outil (1), sont élastiquement déformables radialement vers l'intérieur et serrent ainsi le fût (10) de l'outil (5) dans le logement (19, 19a) de la monture à coincement (2, 2a à 2c).

2. Outil combiné selon la revendication 1, caractérisé en ce que la monture à coincement (2, 2a, 2b) est susceptible d'être serrée par voie hydraulique dans le logement à outil (1) avec une douille de serrage (11, 11a, 11b).

3. Outil combiné selon la revendication 1, caractérisé en ce que la partie de serrage (54) de la monture à coincement (2c) est réalisée sous forme de tige de serrage.

4. Outil combiné selon la revendication 3, caractérisé en ce que la partie de serrage (54) présente un filetage (55) par lequel elle peut être vissée dans le logement à outil.

5. Outil combiné selon l'une quelconque des revendications 1 à 4, caractérisé en ce que la partie de tranchant (3, 4) est fixée sur un des éléments de serrage (20 à 23, 20a à 22a).

6. Outil combiné selon la revendication 5, caractérisé en ce que la partie à tranchant (3, 4) est fixée sur une surface latérale de l'élément correspondant, tournée vers un élément de serrage (20 à 23, 20a à 22a) voisin.

7. Outil combiné selon l'une ou l'autre des revendications 5 et 6, caractérisé en ce que l'élément de serrage (20 à 23, 20a à 22a) présente dans la surface latérale un logement (30 à 33) pour la partie à tranchant (3, 4).

8. Outil combiné selon la revendication 7, caractérisé en ce que tous les éléments de serrage (20 à 23, 20a à 22a) présentent un logement (30 à 33) pour une partie à tranchant (3, 4) respective.

9. Outil combiné selon l'une quelconque des revendications 1 à 4, caractérisé en ce que la monture à coincement (2b) présente au moins pour la partie à tranchant (39) un logement (48, 49) se trouvant en biais par rapport à l'axe de l'outil (5).

10. Outil combiné selon la revendication 9, caractérisé en ce que la partie à tranchant (39) est susceptible d'être coincée dans le logement (48, 49) par une branche de coincement élastique.

11. Outil combiné selon l'une quelconque des revendications 1 à 10, caractérisé en ce que l'outil (5) est réglable axialement de manière continue par rapport à la partie à tranchant (3, 4, 39).
